# EUROPÄISCHE PATENTSCHRIFT

(11) **EP 1 764 538 B1**
(45) Veröffentlichungstag und Bekanntmachung des Hinweises auf die Patenterteilung: **07.01.2009**
(21) Anmeldenummer: 05020447.8
(22) Anmeldetag: 20.09.2005
(51) Int. Cl.: F16K 31/60, G05G 1/06

(54) **Ventil mit Handgriff**
Valve with handle
Soupape avec manche

(43) Veröffentlichungstag der Anmeldung: 21.03.2007
(73) Patentinhaber: Georg Fischer Rohrleitungssysteme AG, 8201 Schaffhausen (CH)
(72) Erfinder: Miklo, Jürgen, 8240 Thayngen (CH); Tkaczyk, Peter, 89275 Elchingen (DE)
(74) Vertreter: Weiss, Wolfgang

(56) Entgegenhaltungen:
- EP-A- 0 702 177
- WO-A-90/01650
- DE-A1- 4 133 548
- DE-U- 7 540 569

## Beschreibung

Die Erfindung bezieht sich auf ein Ventil mit einem Handgriff umfassend einen Verbindungsbereich zur Verbindung des Handgriffes mit einer Spindel des Ventils, einen Betätigungsarm zur Betätigung des Ventils, einen im Betätigungsarm federnd angeordneten Rasthebel zum Einrasten des Betätigungsarmes und eine Rast- und Führungsscheibe zur Verrastung und Führung des Handgriffes, wobei die Rast- und Führungsscheibe einen grösseren Aussendurchmesser als den Verbindungsbereich aufweist und verbindbar mit einem Flanschbereich des Ventils angeordnet ist.

In Rohrleitungssysteme werden je nach Aufgabenstellung Ventile verschiedener Bauart, beispielsweise Kugelhähne oder Klappenventile, verwendet. Je nach Aufgabenstellung und Auslegung der Steuerung werden Ventile verwendet, die in verschiedenen Ventilstellungen gehalten werden, oder, bei Abwesenheit einer Steuerung manuell auf- oder zugedreht werden. Die genau reproduzierbare Einstellung des Ventils kann für die Prozessführung entscheidend sein.

Aus der DE 10317808 A1 ist ein gattungsgemässer Handgriff für Ventile bekannt. Der Handgriff wird mit einem zylindrischen Halsbereich über die Ventilspindel gesteckt und bei der Drehbewegung von einem Führungsring geführt. Der Führungsring ist innerhalb des zylindrischen Halsbereiches angeordnet. Im Arm des Handgriffs ist eine Betätigungssperre federnd angeordnet. Die Betätigungssperre wirkt zusammen mit einem Klinkenteil, das in axialer Richtung von einer Raststellung in einer Betätigungsstellung angehoben werden kann. Der Handgriff ist mit einer Verschlussplatte gegen unberechtigte Betätigung gesichert.

Aus der EP 0 702 177 A1 ist eine Absperrklappe mit einem drehbaren Handgriff bekannt. Der Handgriff ist auf einem scheibenförmigen Zwischenstück gelagert, das Rastöffnungen aufweist. Wenn die Absperrklappe stufenlos betätigt werden soll, muss der Handgriff mit dem Zwischenstück ausgetauscht werden. Das Zwischenstück weist ein kreisbogenförmiges Langloch auf. Im Langloch wird eine Klemmeinrichtung klemmbar geführt.

Aus der WO 90/01650 A1 ist ein ähnlicher Handgriff bekannt. Der Handgriff kann sowohl in Raststellungen als auch stufenlos betätigt werden. Hierzu sind zwei Scheiben, eine feststehende und eine bewegliche Scheibe, und weiterhin eine Klemmeinrichtung zur Verbindung mit dem Handgriff angeordnet.

In der DE 75 40 569 U ist weiterhin eine Drosselklappe mit einem Handgriff dargestellt. Wie der Handgriff mit dem Flanschbereich der Drosselklappe zusammen wirkt, ist nicht offenbart.

Ausgehend von diesem Stand der Technik ist es Aufgabe der Erfindung, ein Handgriff für Ventile anzugeben, der aus möglichst wenigen Teilen aufgebaut ist und an unterschiedlichen Ventilbauarten angepasst werden kann.

Diese Aufgabe wird gelöst durch ein Ventil mit Handgriff umfassend einen Verbindungsbereich zur Verbindung des Handgriffes mit einer Spindel des Ventils, einen Betätigungsarm zur Betätigung des Ventils, einen im Betätigungsarm federnd angeordneten Rasthebel zum Einrasten des Betätigungsarmes und eine Rast- und Führungsscheibe zur Verrastung und Führung des Handgriffes, wobei die Rast- und Führungsscheibe einen grösseren Aussendurchmesser als den Verbindungsbereich aufweist und verbindbar mit einem Flanschbereich des Ventils angeordnet ist, wobei im Flanschbereich des Ventils zusammenwirkend mit dem Handgriff einen Schaltring angeordnet ist.

Bevorzugte Weiterbildungen der Erfindung ergeben sich aus den abhängigen Ansprüchen und aus der Beschreibung.

Es ist von Vorteil, dass der Handgriff sowohl kontinuierlich und frei wählbar als auch diskontinuierlich und in diskreten Schritten betätigt werden kann. Dies wird dadurch erreicht, dass die Rast- und Führungsscheibe an zwei gegenüber liegenden Seiten mit unterschiedlichen Führungs- und Rastmitteln ausgebildet ist. Die Rast- und Führungsscheibe kann zwischen dem Handgriff und dem Flanschbereich des Ventils mit vier unterschiedlichen Ausrichtungen eingebaut werden.

Es ist auch von Vorteil, dass mit dem Handgriff die Gesamtbauhöhe des Ventils möglichst gering gehalten werden kann. Dies wird dadurch erreicht, dass der Schaltring und die Rast- und Führungsscheibe möglichst flach ausgebildet sind und teilweise in einander greifend angeordnet sind.

Ein Ausführungsbeispiel der Erfindung wird anhand der Figuren beschrieben. Es zeigen:
Figur 1 eine perspektivische Sicht auf einem erfindungsgemässen Handgriff für Ventile,
Figur 2 einen perspektivische bereichsweise Sicht auf einem Ventil zur Betätigung mit dem Handgriff von Figur 1,
Figur 3 eine perspektivische Sicht auf einer Rast- und Führungsscheibe zum Handgriff von Figur 1 und
Figur 4 eine weitere perspektivische Sicht auf der Rast- und Führungsscheibe von Figur 4.

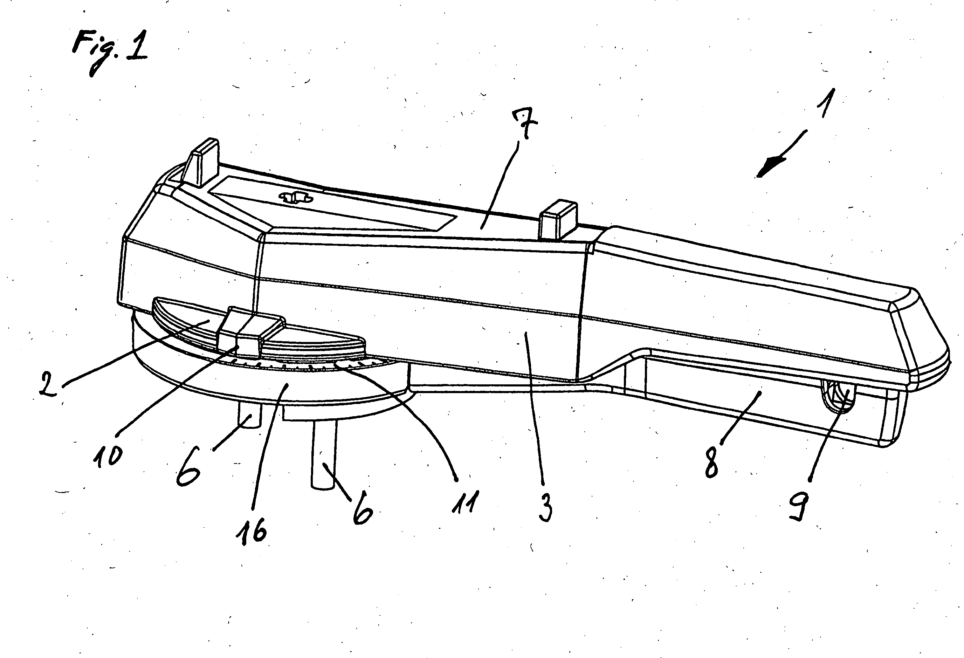

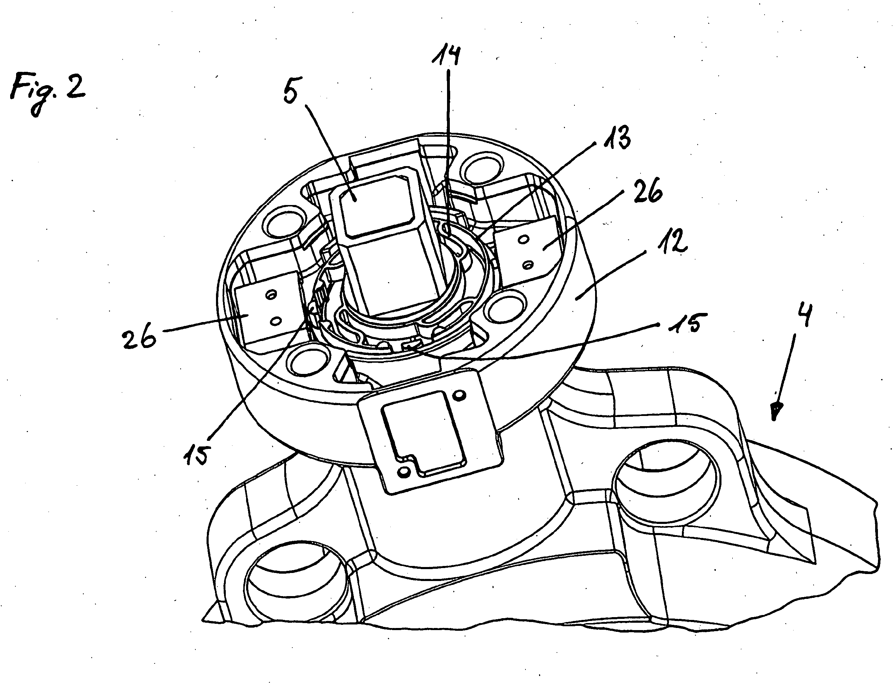

In Figur 1 ist ein Handgriff 1 zur Betätigung von Ventilen perspektivisch dargestellt. Der Handgriff 1 besteht im Wesentlichen aus einem Verbindungsbereich 2 und einem Betätigungsarm 3. Der Verbindungsbereich 2 ist im Wesentlichen kreisförmig um die Drehachse des Ventils ausgebildet und bildet der untere Bereich des Betätigungsarmes 3. Der Handgriff 1 passt zum Ventil 4, das in Figur 2 bereichsweise perspektivisch dargestellt ist. Der Verbindungsbereich 2 weist auf der Unterseite eine Aufnahme auf, die passend zur Spindel 5 des Ventils 4 ausgebildet ist. Mit der Aufnahme wird der Handgriff 1 auf die Spindel 5 des Ventils 4 gesteckt oder geschraubt und bildet so eine formschlüssige Verbindung. Als Alternative kann die Aufnahme auch an der Spindel 5 ausgebildet sein. In diesem Fall ist auf der Unterseite des Verbindungsbereiches 2 einen zu dieser Aufnahme passenden Vorsprung ausgebildet. Der Verbindungsbereich 2 weist auch zwei axial nach unten gerichteten Finger 6 auf, die in teilkreisförmige Nuten am Gehäuse des Ventils 4 eingreifen. Auf der Oberseite ist der Verbindungsbereich 2 mit einer Verschlussplatte 7 abgeschlossen. Die Verschlussplatte 7 ist aus einem mechanisch festeren Werkstoff als der Rest des Handgriffes 1 hergestellt und kann somit auch als Werkzeug bei der Montage und Demontage eines Kugelhahnes verwendet werden.

Im Betätigungsarm 3 ist ein Rasthebel 8 ersichtlich. Der Rasthebel 8 ist beweglich innerhalb des Betätigungsarmes angeordnet. Der Rasthebel 8 dient zur Freigabe der Betätigung des Handgriffes 1 und kann entgegen einer Federkraft in axialer Richtung angehoben werden. Der Rasthebel 8 weist einen Durchgang 9 auf, durch die ein Schlossbügel eingeführt werden kann. Wenn der Schlossbügel eingehängt und abgeschlossen ist, kann der Handgriff 1 und somit das Ventil 4 vor unberechtigter Betätigung gesichert werden. Der Verbindungsbereich 2 des Handgriffes 1 weist auch mindestens links oder rechts vom Betätigungsarm 3 einen Anzeigepfeil 10 auf, die auf einer Skala 11 an einer Rast- und Führungsscheibe 16 anzeigt, in welcher Stellung sich der Handgriff 1 und somit auch die Spindel 5 des Ventils 4 befindet.

In Figur 2 ist ein Flanschbereich 12 des Gehäuses eines Ventils 4 perspektivisch dargestellt. Das Ventil 4 in Figur 2 ist als Absperrklappe ausgebildet, kann aber beispielsweise auch als Kugelhahn ausgebildet sein. In dem Flanschbereich 12 steht die Spindel 5 zur Aufnahme des Verbindungsbereiches 2 nach oben vor. Im Flanschbereich 12 ist in einer Ebene rund um die Spindel 5 ein Schaltring 13 angeordnet. Der Schaltring 13 hat einen Innendurchmesser, der genau zum Aussendurchmesser der Spindel 5 passt und folgt die Drehbewegungen der Spindel 5. Der Schaltring 13 weist in radialer Richtung federnde S-förmige Bereiche 14 und radial nach aussen gerichtete Nocken 15 auf. Mit den federnden S-förmigen Bereichen 14 wird der Schaltring 13 im Flanschbereich 12 des Ventils 4 gelagert und auch bei Erschütterung, Deformation oder Ausdehnung als Folge von Temperatur- oder Druckunterschieden des Ventils 4 sicher und mit gleich bleibender Genauigkeit geführt. Die Nocken 15 dienen zur Betätigung von elektrischen oder mechanischen Schaltern 26. Hiermit wird erreicht, dass eine Rückmeldung der Ventilstellung an eine Anzeigetafel oder an einer Mess-, Steuer- und Regelzentrale geleitet werden kann. Durch die radiale Ausrichtung der Nocken 15 wird ein sehr flacher Aufbau des Flanschbereiches 12 ermöglicht. Durch die Anordnung in einer Ebene werden auch Andruckfedern oder Rückhaltebügeln zur Sicherung des Kontaktes zwischen Nocken 15 und Schaltern 26 nicht mehr benötigt. Die Höhe des Schaltringes 13 ist wesentlich geringer als die Höhe der Rast- und Führungsscheibe 16. Hiermit wird erreicht, dass der Schaltring 13 innerhalb der Rast- und Führungsscheibe 16 angeordnet werden kann und insgesamt Bauhöhe eingespart werden kann.

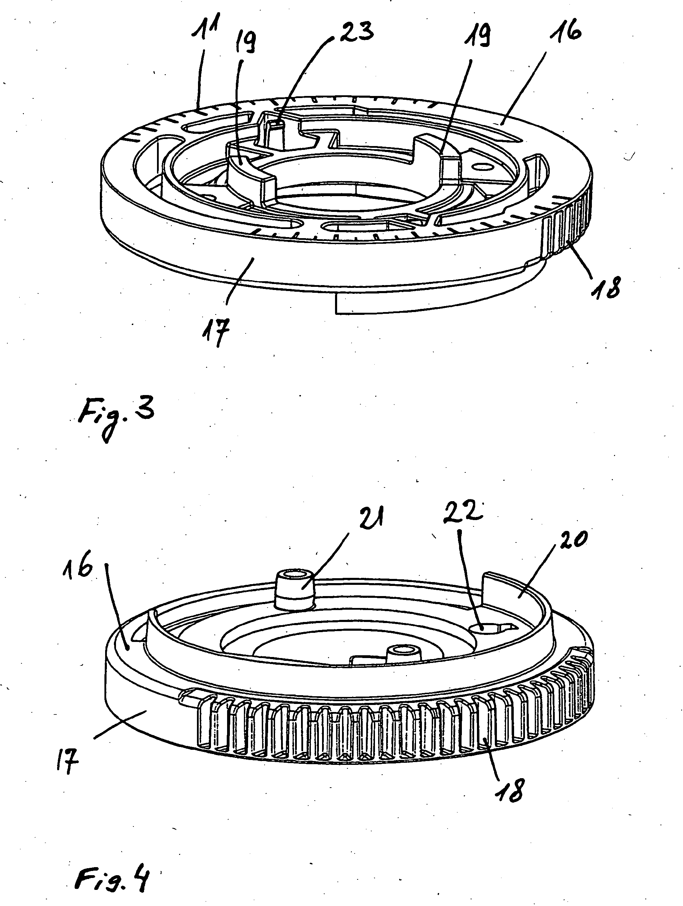

In Figur 3 und Figur 4 ist eine Rast- und Führungsscheibe 16 perspektivisch dargestellt. Die Rast- und Führungsscheibe 16 wird unterhalb des Verbindungsbereiches 2 des Handgriffes 1 und oberhalb des Flanschbereiches 12 des Ventils 4 angeordnet. Die Rast- und Führungsscheibe 16 ist in den Figuren 3 und 4 gesehen von zwei gegenüber liegenden Seiten dargestellt. Die Rast- und Führungsscheibe 16 hat auf beiden Seiten unterschiedliche Rast- und Führungsmittel und kann deshalb für unterschiedliche Aufgaben eingesetzt werden. In Figur 3 ist die Rast- und Führungsscheibe mit der Skala 11 zur Anzeige der Stellung des Handgriffs 1 nach oben weisend dargestellt. Am Aussenrand 17 der Rast- und Führungsscheibe 16 ist einen Bereich mit Kerben 18 ausgebildet, in die der Rasthebel 8 des Handgriffes 1 eingreifen kann. In Figur 3 sind die Kerben 18 verteilt über einen Umfangswinkel von 90° angeordnet. Auf der diametral gegenüber liegenden Seite sind am Aussenrand 17 der Rast- und Führungsscheibe 16 keine Kerben 18 ausgebildet. Für Ventile, die einen grösseren Öffnungswinkel als 90° benötigen, kann der Umfangswinkel des Bereiches mit den Kerben 18 grösser, bis etwa 180°, gewählt werden.

Die Rast- und Führungsscheibe 16 kann in vier unterschiedlichen Orientierungen eingebaut werden, entweder durch Drehung um die Scheibenachse um 180°, oder durch Umkehrung der Scheibe 16, so dass Oberseite und Unterseite abgetauscht werden. Wenn die Rast- und Führungsscheibe 16 umgekehrt eingebaut wird, wie zum Beispiel in Figur 4 dargestellt ist, greift der Rasthebel 8 nicht in die Kerben 18 ein und das Ventil 4 kann kontinuierlich, das heisst frei wählbar in beliebiger Stellung, eingestellt werden. Vor allem bei Klappenventile ist diese Einstellmöglichkeit vorteilhaft.

Aus der Ebene der Rast- und Führungsscheibe 16 ragen auf beiden Seiten der Scheibe 16 unterschiedliche Führungsmittel 19,20 heraus. Hiermit wird erreicht, dass der gleiche Handgriff 1 an unterschiedlichen Bauarten von Ventilen angepasst werden kann.

In Figur 3 sind die Führungsmittel 19 als zwei gegenüber einander liegend angeordneten Zapfen 19 ausgebildet. In Figur 4 ist das Führungsmittel 20 als eine durchgehende Kulisse 20 ausgebildet, die sich über einen Umfangswinkel von mehr als 180° erstreckt. Mit den Zapfen 19 kann der Rast- und Führungsscheibe 16 in dazu passenden Aufnahmen im Flanschbereich 12 des Ventils 4 eingesetzt werden. Mit der Kulisse 20 können, bei entsprechender Ausbildung, weitere Funktionen angesteuert werden. Beispielsweise kann mit der Kulisse 20 die Drehbewegung der Scheibe gebremst werden. In Figur 4 sind auch konisch ausgebildete Positionierungszapfen 21 für die Ausrichtung der Scheibe 16 ersichtlich. Je nach Bauart des Ventils 4 kann die Rast- und Führungsscheibe 16 am Flanschbereich 12 des Ventils angeschraubt werden. Die Schrauben werden in Durchgängen 22 eingeführt und dabei von Rasthaken 23 bis zur endgültigen Montage des Ventils 4 gehalten. Die Rasthaken 23 sind am Rand der Durchgänge 22 auf der gegenüber liegenden Seite der Scheibe 16 ausgebildet. Mit der Rast- und Führungsscheibe 16 kann der gleiche Handgriff 1 sowohl in Verbindung mit beispielsweise einem Klappenventil als auch mit einem Kugelhahn eingesetzt werden.

## Patentansprüche

1. Ventil (4) mit einen Handgriff (1) umfassend einen Verbindungsbereich (2) zur Verbindung des Handgriffes (1) mit einer Spindel (5) des Ventils (4), einen Betätigungsarm (3) zur Betätigung des Ventils (4), einen im Betätigungsarm (3) federnd angeordneten Rasthebel (8) zum Einrasten des Betätigungsarmes (3) und eine Rast- und Führungsscheibe (16) zur Verrastung und Führung des Handgriffes (1), wobei die Rast- und Führungsscheibe (16) einen grösseren Aussendurchmesser als den Verbindungsbereich (2) aufweist und verbindbar mit einem Flanschbereich (12) des Ventils (4) angeordnet ist, **dadurch gekennzeichnet, dass** im Flanschbereich (12) des Ventils (4) zusammenwirkend mit dem Handgriff (1) einen Schaltring (13) angeordnet ist.

2. Ventil nach dem Anspruch 1, **dadurch gekennzeichnet, dass** der Rast- und Führungsscheibe (16) an zwei gegenüber liegenden Seiten mit unterschiedlichen Führungs- und Rastmitteln (18,19,20,21,23) derart ausgebildet ist, dass die Rast- und Führungsscheibe (16) in Übereinstimmung mit der Bauart und der Aufgabe des Ventils (4) in vier unterschiedlichen Ausrichtungen eingebaut werden kann.

3. Ventil nach mindestens einem der Ansprüche 1 oder 2, **dadurch gekennzeichnet, dass** die Rastmittel (18) als Kerben (18) am Aussenumfang der Rast- und Führungsscheibe (16) ausgebildet sind.

4. Ventil nach mindestens einem der Ansprüche 1 bis 3, **dadurch gekennzeichnet, dass** die Kerben (18) am Aussenumfang der Rast- und Führungsscheibe (16) in einem Bereich mit einem Umfangswinkel von etwa 90° bis 180° ausgebildet sind.

5. Ventil nach mindestens einem der Ansprüche 1 bis 4, **dadurch gekennzeichnet, dass** an der Rast- und Führungsscheibe (16) auf einer ersten Seite in axialer Richtung verlaufend angeordnete Zapfen (19) ausgebildet sind.

6. Ventil nach mindestens einem der Ansprüche 1 bis 5, **dadurch gekennzeichnet, dass** an der Rast- und Führungsscheibe (16) auf der dem ersten gegenüber liegenden Seite eine in axialer Richtung verlaufend angeordnete Kulisse (20) ausgebildet ist.

7. Ventil nach mindestens einem der Ansprüche 1 bis 6, **dadurch gekennzeichnet, dass** die Kulisse (20) über einen Umfangswinkel von mehr als 180° durchgehend ausgebildet ist.

8. Ventil nach mindestens einem der Ansprüche 1 bis 7, **dadurch gekennzeichnet, dass** der Schaltring (13) in radialer Richtung federnde S-förmige Bereiche (4) und radial nach aussen gerichtete Nocken (15) aufweist.

9. Ventil nach mindestens einem der Ansprüche 1 bis 8, **dadurch gekennzeichnet, dass** der Schaltring (13) eine Höhe aufweist, die kleiner ist als die Höhe der Rast- und Führungsscheibe (16), wobei der Schaltring (13) und die Rast- und Führungsscheibe (16) zumindest teilweise in einander greifend angeordnet sind.

## Claims

1. Valve (4) with a handle (1), comprising a connecting region (2) for connecting the handle (1) to a spindle (5) of the valve (4), an actuating arm (3) for actuating the valve (4), a locking lever (8) arranged resiliently in the actuating arm (3) for engaging the actuating arm (3) and a locking and guide disc (16) for locking and guiding the handle (1), wherein the locking and guide disc (16) has a greater external diameter than the connecting region (2) and is arranged to be able to be connected to a flange region (12) of the valve (4), **characterized in that** in the flange region (12) of the valve (4) a switching ring (13) is arranged to cooperate with the handle (1).

2. Valve according to Claim 1, **characterized in that** the locking and guide disc (16) is configured with different guide and locking means (18, 19, 20, 21, 23) on two opposing sides, such that the locking and guide disc (16) may be fitted to coincide with the design and the purpose of the valve (4) in four different orientations.

3. Valve according to at least one of Claims 1 or 2, **characterized in that** the locking means (18) are configured as notches (18) on the outer circumference of the locking and guide disc (16).

4. Valve according to at least one of Claims 1 to 3, **characterized in that** the notches (18) are configured on the outer circumference of the locking and guide disc (16) in a region with a circumferential angle of approximately 90° to 180°.

5. Valve according to at least one of Claims 1 to 4, **characterized in that** lugs (19) arranged to extend in the axial direction are configured on a first side on the locking and guide disc (16).

6. Valve according to at least one of Claims 1 to 5, **characterized in that** on the locking and guide disc (16) a slide (20) arranged to extend in the axial direction is configured on the side opposing the first.

7. Valve according to at least one of Claims 1 to 6, **characterized in that** the slide (20) is configured continuously over a circumferential angle of more than 180°.

8. Valve according to at least one of Claims 1 to 7, **characterized in that** the switching ring (13) comprises resilient S-shaped regions (14) in the radial direction and cam lobes (15) oriented radially outwardly.

9. Valve according to at least one of Claims 1 to 8, **characterized in that** the height of the switching ring (13) is lower than the height of the locking and guide disc (16), the switching ring (13) and the locking and guide disc (16) being arranged to engage at least partially in one another.

## Revendications

1. Soupape (4) avec un manche (1), comprenant une région de connexion (2) pour la connexion du manche (1) à une broche (5) de la soupape (4), un bras d'actionnement (3) pour l'actionnement de la soupape (4), un levier d'encliquetage (8) disposé de manière élastique dans le bras d'actionnement (3) pour l'encliquetage du bras d'actionnement (3) et un disque d'encliquetage et de guidage (16) pour l'encliquetage et le guidage du manche (1), le disque d'encliquetage et de guidage (16) présentant un plus grand diamètre extérieur que la région de connexion (2) et pouvant être connecté à une région de bride (12) de la soupape (4), **caractérisée en ce que** dans la région de bride (12) de la soupape (4) est disposée une bague de commande (13) coopérant avec le manche (1).

2. Soupape selon la revendication 1, **caractérisée en ce que** le disque d'encliquetage et de guidage (16) est réalisé sur deux côtés opposés avec des moyens de guidage et d'encliquetage différents (18, 19, 20, 21, 23), de telle sorte que le disque d'encliquetage et de guidage (16) puisse être incorporé de manière correspondant au type de construction et à la fonction de la soupape (4) dans quatre orientations différentes.

3. Soupape selon au moins l'une quelconque des revendications 1 ou 2, **caractérisée en ce que** les moyens d'encliquetage (18) sont réalisés sous forme d'encoches (18) sur la périphérie extérieure du disque d'encliquetage et de guidage (16).

4. Soupape selon au moins l'une quelconque des revendications 1 à 3, **caractérisée en ce que** les encoches (18) sont réalisées à la périphérie extérieure du disque d'encliquetage et de guidage (16) dans une région ayant un angle périphérique d'environ 90° à 180°.

5. Soupape selon au moins l'une quelconque des revendications 1 à 4, **caractérisée en ce que** des tourillons (19) s'étendant dans la direction axiale sont réalisés sur le disque d'encliquetage et de guidage (16) sur un premier côté.

6. Soupape selon au moins l'une quelconque des revendications 1 à 5, **caractérisée en ce qu'**une coulisse (20) s'étendant dans la direction axiale est réalisée sur le disque d'encliquetage et de guidage (16) sur le côté opposé au premier côté.

7. Soupape selon au moins l'une quelconque des revendications 1 à 6, **caractérisée en ce que** la coulisse (20) est réalisée sous forme continue sur un angle périphérique de plus de 180°.

8. Soupape selon au moins l'une quelconque des revendications 1 à 7, **caractérisée en ce que** la bague de commande (13) présente des régions (14) en forme de S élastiques dans la direction radiale et des cames (15) orientées radialement vers l'extérieur.

9. Soupape selon au moins l'une quelconque des revendications 1 à 8, **caractérisée en ce que** la bague de commande (13) présente une hauteur qui est inférieure à la hauteur du disque d'encliquetage et de guidage (16), la bague de commande (13) et le disque d'encliquetage et de guidage (16) étant disposés de manière à venir en prise l'un dans l'autre au moins en partie.
